(19)

**Europäisches Patentamt**
**European Patent Office**
**Office européen des brevets**

(11) **EP 3 080 901 B1**

(12) **EUROPEAN PATENT SPECIFICATION**

(45) Date of publication and mention
of the grant of the patent:
**13.02.2019 Bulletin 2019/07**

(21) Application number: **14789574.2**

(22) Date of filing: **28.10.2014**

(51) Int Cl.:
**H02M 5/257** *(2006.01)*     **H02M 1/12** *(2006.01)*

(86) International application number:
**PCT/EP2014/073083**

(87) International publication number:
**WO 2015/086218 (18.06.2015 Gazette 2015/24)**

(54) **LOW LEVEL HARMONICS CONTROL SYSTEM FOR GROUPS OF IMPEDANCES CONNECTED IN PARALLEL IN A THREE-PHASE SYSTEM**

LOW-LEVEL-OBERSCHWINGUNGSSTEUERUNGSSYSTEM FÜR GRUPPEN VON PARALLEL GESCHALTETEN IMPEDANZEN IN EINEM DREIPHASENSYSTEM

SYSTÈME DE CONTRÔLE DES HARMONIQUES DE BAS NIVEAU POUR DES GROUPES D'IMPÉDANCES CONNECTÉS EN PARALLÈLE DANS UN SYSTÈME TRIPHASÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2013 EP 13290309**

(43) Date of publication of application:
**19.10.2016 Bulletin 2016/42**

(73) Proprietor: **Solaronics S.A.
59280 Armentières (FR)**

(72) Inventor: **MEAUSOONE, Arnaud
F-59270 Godewaersvelde (FR)**

(74) Representative: **Cabinet Beau de Loménie
Immeuble Eurocentre
179 Boulevard de Turin
59777 Lille (FR)**

(56) References cited:
**EP-A1- 0 040 017         DE-A1- 3 304 322
DE-U1-202006 014 998**

## Description

## Technical Field

The invention relates to a control system for control of supply of electrical power from a network to various groups of impedances.

The invention also relates to the use of such a control system in a non-contact drying system.

## Background Art

A control system for supply of electrical power from a network to electrical resistors is known from US-A-5,053,604.

This prior art control system discloses a process and a device for the control of heating of a furnace by means of electrical resistors. Switching devices such as thyristors are being used. The switching devices are controlled in a syncopated mode by an industrial computer, a logic controller or some equivalent device. A control table with digital values "1" and "0" is being generated by the industrial computer or the like and is being used in a synchronised way as logical control (on - off) of the thyristors.

The prior art control system of US-A-5,053,604, however, is designed for controlling industrial furnaces, and, more particularly, glassmaking furnaces. The heating of glass sheets for tempering and bending needs to be controlled within very narrow ranges. As a result, US-A-5,053,604 discloses measures to adapt for fluctuations in the electrical power as provided by the supply net.

Industrial furnaces with electrical resistors, such as in US-A-5,053,604, have a great time constant or a high thermal inertia, so that the need for a quickly reacting control system is not present.

In addition, the electrical connection used in US-A-5,053,604 is an open delta (triangle) connection, which does not generate a high level of harmonics so that the need for avoiding harmonics is not present. Moreover, the electrical scheme of US-A-5,053,604 only uses two phases and not the three phases.

EP-A1-0 040 017 discloses a control system for control of supply of electrical power from a network to various groups of impedances. The control system comprises a programmable control unit. The impedances are connected in star and the groups are connected in parallel.

DE-A1-33 04 322 discloses an electrical water heater. The electrical power from the network is proportional to the volume flow of water.

## Disclosure of Invention

The invention refers to a control system for control of supply of electrical power from a network to various groups of impedances according to claim 1. Preferred embodiments are defined in the dependent claims.

The primary object of the invention is to provide a control system for control of supply of electrical power to a wider variety of impedances.

It is a particular object of the invention to control the electrical power to a group of impedances with a small time constant or low thermal inertia.

It is another object of the invention to provide a control system which allows to reduce harmonics.

It is yet another object of the invention to provide a control system which makes full and optimal use of a three phase electrical supply network. According a first aspect of the invention there is provided a control system for control of supply of electrical power from a network to various groups of impedances. The control system comprises a synchronisation system for synchronising with the cycles, i.e. the frequency, of a supply network. The control system further comprises a programmable control unit. The programmable control unit has control tables. Each control table corresponds with a particular level of maximum electrical power and each control table has a sequence of bits (0 or 1) where the percentage of 1 values corresponds to the level of maximum power. The control programmable unit provides digital outputs in the form of one of these control tables for the command of static power switches which control electrical power to the various groups of impedances. A "0" in the control table stands for off, a "1" in the control table stands for on. The impedances within at least one group are connected in star, and the various groups of impedances are connected in parallel.

The feature of having various groups of impedances connected in parallel allows reducing harmonics.

The connection in star of the impedances within one group allows optimizing the electrical power.

According to a preferable embodiment, the impedances within at least one group are connected in star without connection to a neutral lead or neutral wire. This avoids a double cabling or double wiring.

According to another preferable embodiment, the synchronisation system generates a signal having cycles. The control unit further comprises pointers, one pointer per group of impedances, and each pointer is positioned on a control table and proceeds with one bit per cycle of said signal. A pointer for a following adjacent next group of impedances is on a position in the control table which is different than the pointer of the previous adjacent group. This difference in position is e.g. one bit.

This difference of position of pointers in different control tables avoids peaks in electrical currents and further reduces the level of harmonics.

In a most preferable embodiment, the signal of the synchronisation system has a phase difference with the supply network.

As will be explained hereinafter with reference to the drawings, this phase difference results in an equal power spreading over the three phases.

According to a practical embodiment, the signal of the synchronisation system is a square wave with a mounting side and a descending side and the above-mentioned pointers proceed with one bit per mounting side of said square wave.

According to another preferable embodiment, the 1 values in each control table are uniformly spread over the control table.

The advantage of this uniform spreading is apparent in case the impedances have a small time constant, which is the case for infrared lamps. The uniform spreading limits the so-called flickering of the lamps.

According to still another preferable embodiment, static power switches are only used in two of the three phases. This saves static power switches in one phase.

According to a second aspect of the invention, there is provided a non-contact drying system comprising a control system according to the first aspect of the invention. In the non-contact drying system the impedances are infrared lamps.

**Brief Description of Figures in the Drawings**

Figure 1a illustrates the synchronisation system of the control system according to the invention and Figure 1b illustrates a phase difference between the cycles of a synchronisation signal and a supply network;

Figure 2 illustrates the control system according to the invention;

Figure 3 shows curves of voltages and currents over a star connection of three infrared lamps.

Figure 4 shows a preferred embodiment of a power supply towards one group of impedances.

Figure 5a, Figure 5b and Figure 5c show curves of voltages and currents over the embodiment of Figure 4.

**Mode(s) for Carrying Out the Invention**

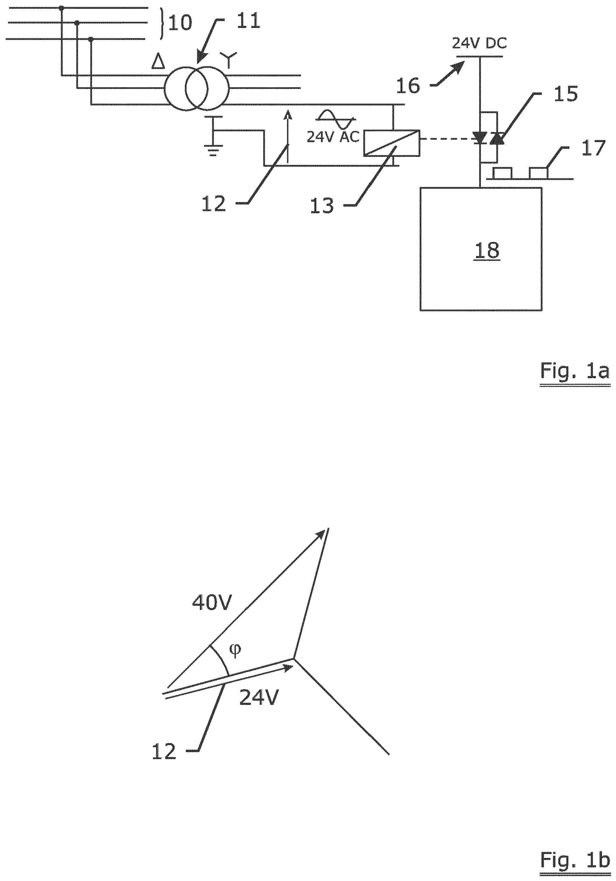

Figure 1a illustrates the synchronisation system of the control system of the invention. A three-phase supply network 10 of electrical power (400 V, AC) is connected to a delta-star transformer 11 with neutral connection. The transformer voltage ratio is 1/10 so that the outcome voltage of the transformer is 40 V, AC. The voltage 12 between the neutral and a phase is $40/\sqrt{3} = 23.1$ V AC or about 24 V. This voltage 12 is fed to a static command switch 13 which commands solid static relays 15. These solid static relays 15 are being fed by a 24 V direct current, and this generates a square wave 17 with amplitude 24 V and a frequency which is equal to the frequency of the supply network 10. Due to the fact that the AC voltage 12 is taken between the neutral and a phase, there is a phase difference φ of 30° between the voltage 12 and the supply network 10. This is illustrated in Figure 1b. This phase difference φ is also existing be-

tween the synchronisation square wave 17 and the supply network 10. The advantage of this phase difference will be explained hereinafter. The synchronisation square wave signal 17 has a mounting side and a descending side.

18 is the synchronised PLC input.

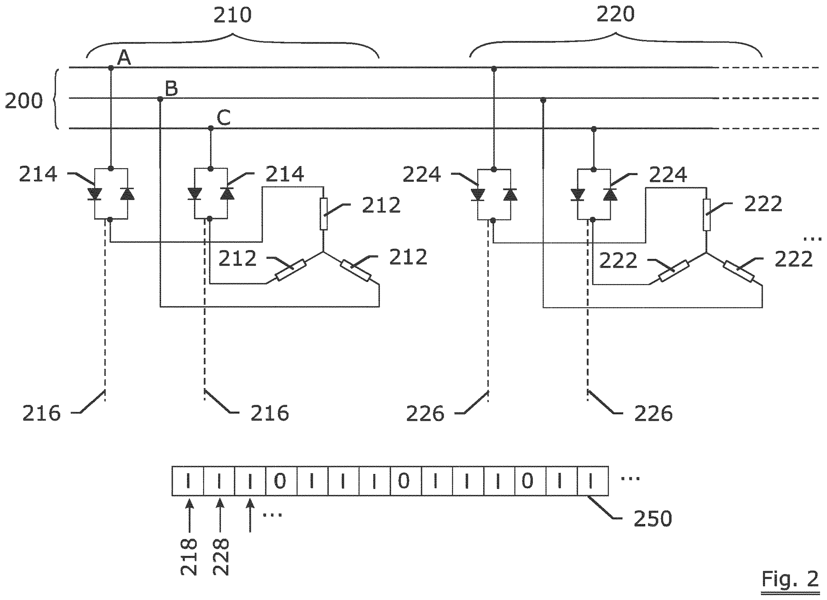

Figure 2 illustrates (part of) the control system according to the invention. A three-phase supply network 200, which is usually the same supply network as in Figure 1, supplies electrical power to a non-contact dryer and profiler. Non-contact drying is done by means of infrared lamps. The infrared lamps are divided in various groups 210, 220, ... For example, there can be three infrared lamps 212 in group 210, three infrared lamps 222 in group 220, and so on. The number of infrared lamps per group can also be a multiple of three: six, nine...

Each group 210, 220 of infrared lamps 212, 222 is connected in parallel to the supply network 200.

Inside each group 210, 220, the infrared lamps 212, 222 are connected in star without a connection to a neutral lead or neutral wire.

Static power switches such as power thyristors 214, 224 on phases A and C determine the electrical currents to the infrared lamps 212, 222.

The static power switches 214, 224 receive a digital input signal 216, 226. The signal is digital, which means that a "0" stands for off and a "1" for on. The value of the digital input signal 216, 226 is determined by the position of a pointer 218, 228 on a control table 250. Pointer 218 is associated with the first group of infrared lamps 212. Pointer 228 is associated with the second group of infrared lamps 222. Pointer 228 is shifted with one bit with respect to the position of pointer 218. Every pointer proceeds with one bit per each mounting side of the synchronisation square wave 17. The shifting of each pointer per group of infrared lamps limits the peaks in electrical currents.

There are 101 control tables 250. Each control table corresponds with a power level between 0% and 100%: 0%, 1%, 2%, ..., 99%, 100%.

Each table has e.g. 256 bits. The percentage of 1 values corresponds to the percentage of maximum power level.

The table of 0% has only 0 values: 00000000...

The table of 50% has 50 % 0 values and 50% 1 values: 11001001100...

The table of 75% has 75% 1 values: 1110111011101110...

The table of 100% has only 1 values: 111111111111111...

Most preferably the 1 values are uniformly spread in a control table, since this reduces the flickering effect of the infrared lamps.

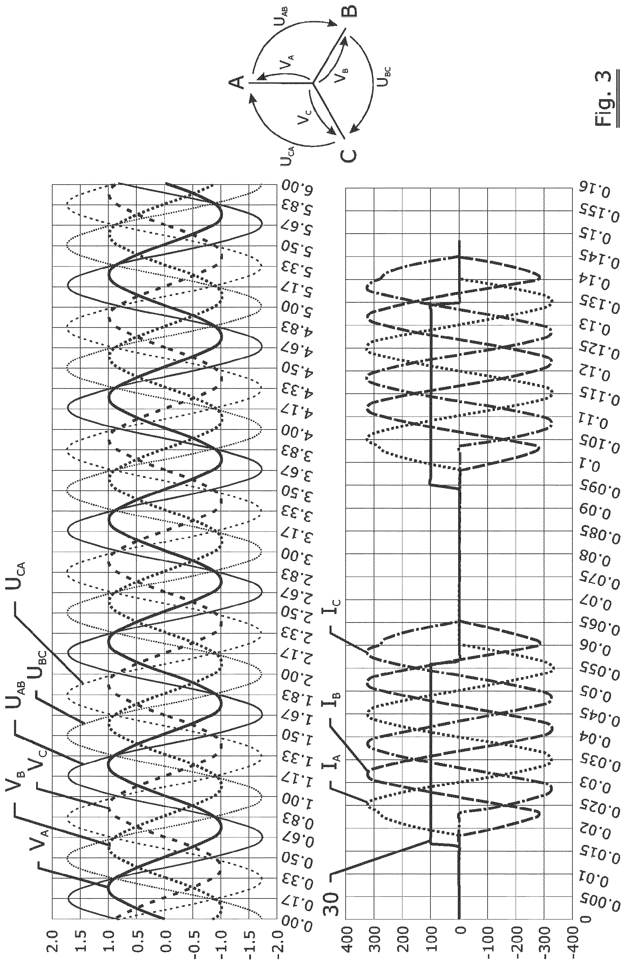

Figure 3 shows curves of voltages and currents over a star connection of three infrared lamps over four periods.

The curves in the upper half are the curves of the voltages, which are all sinusoidal.

Curves $U_{AB}$, $U_{BC}$ and $U_{CA}$ are resp. the voltages between the points A-B, B-C and C-A on Figure 2.

Curves $V_A$, $V_B$ and $V_C$ are resp. the voltages between the middle of the start and A, the middle of the star and B and the middle of the star and C.

Looking at the curves in the lower half, curve 30 is the command signal. The power thyristors 214 only conduct in case the corresponding voltage $V_A$, $V_B$ or $V_C$ cross the zero Volt and the command signal 30 has a positive value. The electrical currents thus generated are represented by curves $I_A$, $I_B$ and $I_C$ resp.

These electrical currents are not sinusoidal and each electrical current, taken alone, generates harmonics. However, due to the fact that various groups, e.g. ten groups, of infrared lamps are connected in parallel the global effect of harmonics is reduced.

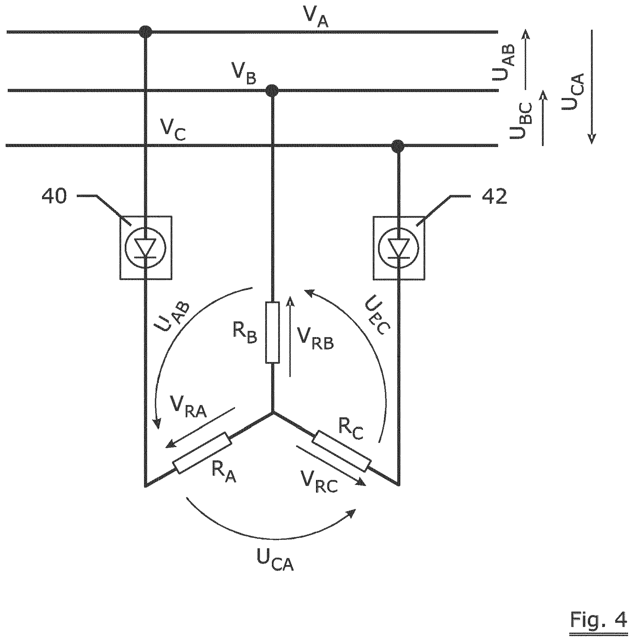

Figure 4 shows a preferred embodiment of a power supply towards one group of impedances. As is the case with the embodiment of Figure 2, the embodiment of Figure 4 has the advantage that it has only two static relays 40 and 42.

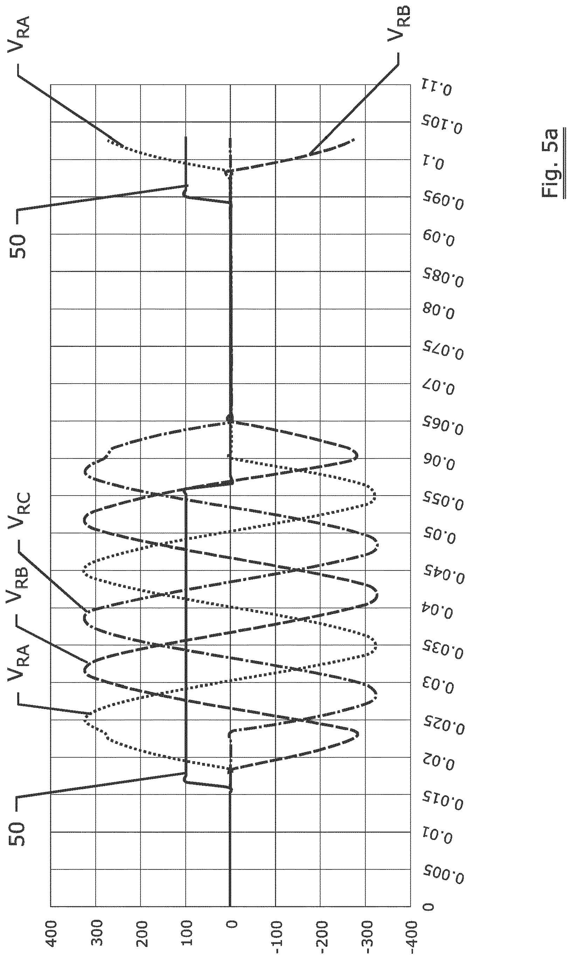

Figure 5a shows curves of voltages and currents over the embodiment of Figure 4.

The power supply network is a three phase network with 400 VAC and 50 Hz. Phases A and C are supplied over a static relay, phase B is directly supplied. The three infrared lamps to be supplied have impedances $R_A$, $R_B$ and $R_C$. These infrared lamps have a nominal power of 3000 W under 235 VAC. In this example the command signal 50 corresponds to 50% of the maximum power and has as control table 110011001100... The joint command signal 50 for both static relays 40 and 42 is a square wave 50 with a positive signal during 40 msec followed by a zero signal during 40 msec.

$V_{RA}$, $V_{RB}$ and $V_{RC}$ are the voltages over resp. the impedances $R_A$, $R_B$ and $R_C$ of the three infrared lamps. The power obtained for each infrared lamp is:

$$P_A = 1501 \text{ W}$$

$$P_B = 1490 \text{ W}$$

$$P_C = 1501 \text{ W}$$

So the power for each infrared lamp is more or less equal. In order to obtain this uniform distribution of power, it is important to avoid that the mounting sides of the command signal 50 coincide with the passage through zero of the voltages $U_{AB}$ and $U_{BC}$. As explained with reference to Figure 1a and Figure 1b, this may be obtained by cabling the static command switch of the synchronisation system at the secondary site of a delta star transformer between one phase and a neutral. In this way a phase difference $\varphi$ is created between the square wave 17 of the synchronisation system and the voltages $U_{AB}$, $U_{BC}$ and $U_{CA}$. This phase difference avoids the simultaneous starting of the mounting side of the square wave 17 and the passage through zero of $U_{AB}$ and $U_{BC}$.

Suppose the phase difference $\varphi$ is not present, the minor delay of the square wave 17 may result in a static relay or power switch staying off instead of switching on, or vice versa.

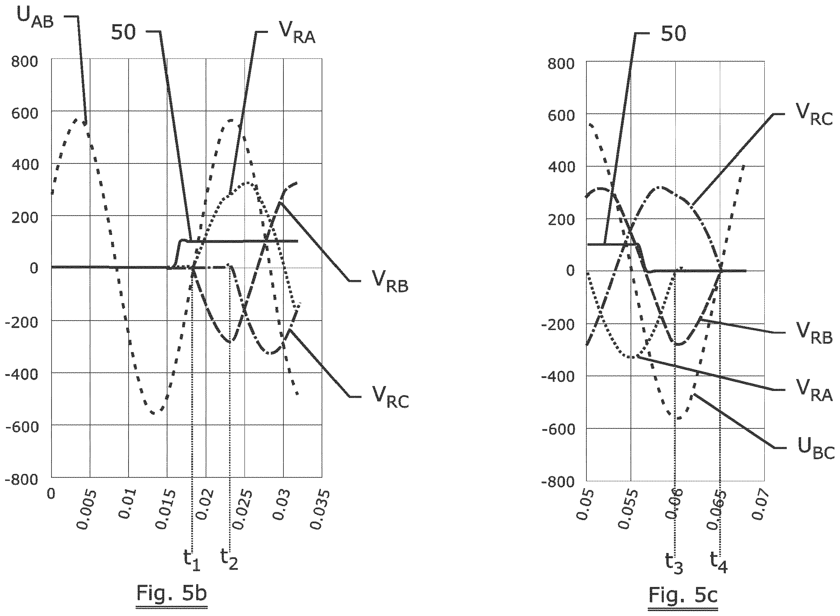

Figure 5b shows in more detail when the 1st static relay 40 and the 2nd static relay 42 and the three impedances $R_A$, $R_B$ and $R_C$ start to conduct.

The 1st static relay 40 starts to conduct from $t_1$ on at a time when the voltage $U_{AB}$ passes through zero and the command signal 50 is positive. The voltage over $R_A$ is then equal to $U_{AB}/2$ and over $R_B$ equal to $-U_{AB}/2$.

From $t_2$ on, at a time when $V_C$ passes through zero, the 2nd static relay 42 starts to conduct. From $t_2$ on the three impedances $R_A$, $R_B$ and $R_C$ are fed in all three phases.

Referring to both Figure 5b and Figure 5c, the three impedances $R_A$, $R_B$ and $R_C$ are fed in all three phases between $t_2$ and $t_3$.

Figure 5c shows in more detail when the 1st static relay 40 and the 2nd static relay 42 and the three impedances $R_A$, $R_B$ and $R_C$ stop to conduct.

At $t_3$ $V_A$ passes through zero at a moment when the command signal 50 has already turned to zero. The 1st static relay 40 stops to conduct. The 2nd static relay 42 continues to conduct until $t_4$. The voltage over $R_C$ is equal to $-U_{BC}/2$ and the voltage over $R_B$ is equal to $U_{BC}/2$.

At $t_4$, at a time when $U_{BC}$ passes through zero and the command signal 50 is zero, the 2nd static relay also stops to conduct.

As may be derived from Figure 5a, apart from the start period $t_1$-$t_2$ and the stop period $t_3$-$t_4$, the signals are very close to a sinusoidal form so that the level of harmonics is limited.

In addition, and as already mentioned, since various groups of impedances are cabled in parallel, the effect of harmonics is further minimized.

Table with reference numbers and symbols

| | |
|---|---|
| 10 | electric power supply network |
| 11 | transformer |
| 12 | voltage between neutral and one phase |
| 13 | static command switch |
| 15 | solid static relays |
| 16 | 24 DC voltage |
| 17 | synchronisation square wave |
| 18 | synchronisation input PLC |
| Y | star connection |
| $\Delta$ | delta connection |
| $\varphi$ | phase difference |
| 200 | electric supply network |

| 210 | first group of infrared lamps |
| 212 | infrared lamp |
| 214 | power thyristors |
| 216 | digital input signal |
| 218 | pointer on control table |
| 220 | second group of infrared lamps |
| 222 | infrared lamp |
| 224 | power thyristors |
| 226 | digital input signal |
| 228 | pointer on control table |
| 250 | control table |
| 30 | command signal |
| 40 | 1st static relay |
| 42 | 2nd static relay |
| 50 | command signal |
| $U_{AB}$ | voltage between A and B |
| $U_{BC}$ | voltage between B and C |
| $U_{CA}$ | voltage between C and A |
| $V_A$ | voltage on A |
| $V_B$ | voltage on B |
| $V_C$ | voltage on C |
| $I_A$ | current through infrared lamp of phase A |
| $I_B$ | current through infrared lamp of phase B |
| $I_C$ | current through infrared lamp of phase C |
| $R_A$ | impedance of infrared lamp |
| $R_B$ | impedance of infrared lamp |
| $R_C$ | impedance of infrared lamp |
| $V_{RA}$ | voltage over impedance $R_A$ |
| $V_{RB}$ | voltage over impedance $R_B$ |
| $V_{RC}$ | voltage over impedance $R_C$ |

**Claims**

1. A control system for control of supply of electrical power from a network (10; 200) to various groups of impedances (210; 220),
   the various groups being connected in parallel,
   the impedances within at least one group being connected in star,
   said control system comprising a synchronisation system (17;18) for synchronising with the cycles of an AC supply network,
   said control system further comprising a programmable control unit,
   said programmable control unit having control tables (250), **characterized in that**
   each control table (250) corresponding with a particular percentage of maximum electrical power,
   each control table (250) having a sequence of bits 0 or 1, the percentage of 1 values in each control table (250) corresponding to the percentage of maximum power,
   said programmable control unit providing digital outputs in the form of said control tables (250) for the command of static power switches which control electrical power to said various groups of impedances, a "0" in the control table standing for off, a "1" in the control table standing for on.

2. A control system according to claim 1,
   where the impedances (210; 220) within said at least one group are connected in star without connection to a neutral lead or neutral wire.

3. A control system according to claim 1 or claim 2,
   wherein said synchronisation system (17; 18) generates a signal having cycles, and
   wherein said control unit further comprises pointers (218; 228), one pointer per group of impedances, each pointer (218; 228) being positioned on a control table (250) and proceeding with one bit per cycle of said signal,
   a pointer (218; 228) for a following adjacent next group of impedances (210; 220) being on a position in the control table (250) which is different than the pointer (218; 228) of the previous adjacent group.

4. A control system according to claim 3,
   wherein said signal has a phase difference ($\varphi$) with the supply network.

5. A control system according to claim 4,
   wherein said signal is a square wave (17) with a mounting side and a descending side and wherein said each pointer (218; 228) proceeds with one bit per mounting side of said square wave.

6. A control system according to any one of the preceding claims,
   wherein the '1' values in each control table (250) are uniformly spread over said control table (250).

7. A control system according to any one of the preceding claims,
   wherein said impedances are infrared lamps (212; 222).

8. A control system according to any of the preceding claims,
   wherein static power switches (214; 224) are used in only two of the three phases.

9. A non-contact drying system comprising a control system according to any one of the preceding claims.

**Patentansprüche**

1. Steuerungssystem zur Steuerung der elektrischen Stromversorgung von einem Netz (10; 200) an verschiedene Gruppen von Impedanzen (210; 220),
   wobei die verschiedenen Gruppen parallel geschaltet sind,
   wobei die Impedanzen in wenigstens einer Gruppe in Stern geschaltet sind,

wobei das Steuerungssystem ein Synchronisationssystem (17; 18) zum Synchronisieren mit den Zyklen eines Wechselstrom (AC)-Versorgungsnetzes umfasst,

wobei das Steuerungssystem ferner eine programmierbare Steuerungseinheit umfasst,

wobei die programmierbare Steuerungseinheit Steuerungstabellen (250) aufweist,

**dadurch gekennzeichnet, dass**

jede Steuerungstabelle (250) einem bestimmten Prozentsatz der maximalen elektrischen Leistung entspricht,

jede Steuerungstabelle (250) eine Abfolge von "0"- oder "1"-Bits aufweist, wobei der Prozentsatz der "1"-Werte in jeder Steuerungstabelle (250) dem Prozentsatz der maximalen Leistung entspricht,

wobei die programmierbare Steuerungseinheit digitale Ausgänge in Form der Steuerungstabellen (250) bereitstellt, um die statischen Leistungsschalter anzusteuern, die die elektrische Leistung an die verschiedenen Gruppen von Impedanzen regeln, wobei eine "0" in der Steuerungstabelle für "aus" und eine "1" in der Steuerungstabelle für "ein" steht.

2. Steuerungssystem gemäß Anspruch 1,
wobei die Impedanzen (210; 220) in der wenigstens einen Gruppe in Stern geschaltet sind, ohne Verbindung mit einem Neutralleiter oder Nullleiter.

3. Steuerungssystem gemäß Anspruch 1 oder Anspruch 2,
wobei das Synchronisationssystem (17; 18) ein Signal erzeugt, das Zyklen aufweist, und
wobei die Steuerungseinheit ferner Zeiger (218; 228) aufweist, je einen Zeiger pro Gruppe von Impedanzen,
wobei jeder Zeiger (218; 228) auf einer Steuerungstabelle (250) positioniert ist und mit einem Bit pro Zyklus des Signals fortschreitet,
wobei ein Zeiger (218; 228) für eine folgende benachbarte Gruppe von Impedanzen (210; 220) an einer Position in der Steuerungstabelle (250) steht, die verschieden ist von dem Zeiger (218; 228) der vorherigen benachbarten Gruppe.

4. Steuerungssystem gemäß Anspruch 3,
wobei das Signal eine Phasendifferenz (φ) zum Versorgungsnetz aufweist.

5. Steuerungssystem gemäß Anspruch 4,
wobei das Signal eine Rechteckwelle (17) mit einer Anstiegsflanke und einer Abfallflanke ist und wobei jeder Zeiger (218; 228) mit einem Bit pro Anstiegsflanke der Rechteckwelle fortschreitet.

6. Steuerungssystem gemäß einem der vorstehenden Ansprüche,
wobei die "1"-Werte in jeder Steuerungstabelle (250) gleichmäßig über die Steuerungstabelle (250) verteilt sind.

7. Steuerungssystem gemäß einem der vorstehenden Ansprüche,
wobei die Impedanzen Infrarotlampen (212; 222) sind.

8. Steuerungssystem gemäß einem der vorstehenden Ansprüche,
wobei statische Leistungsschalter (214; 224) in nur zwei der drei Phasen verwendet werden.

9. Kontaktloses Trocknungssystem, das ein Steuerungssystem gemäß einem der vorstehenden Ansprüche umfasst.

**Revendications**

1. Système de commande pour commander l'alimentation en énergie électrique à partir d'un réseau (10 ; 200) à différents groupes d'impédances (210 ; 220), les différents groupes étant connectés en parallèle, les impédances à l'intérieur d'au moins un groupe étant connectées en étoile, ledit système de commande comprenant un système de synchronisation (17 ; 18) pour la synchronisation avec les cycles d'un réseau d'alimentation CA, ledit système de commande comprenant en outre une unité de commande programmable, ladite unité de commande programmable ayant des tables de commande (250), **caractérisé en ce que** :

chaque table de commande (250) correspondant à un pourcentage particulier de puissance électrique maximale,
chaque table de commande (250) ayant une séquence de bits 0 ou 1, le pourcentage des valeurs égales à 1 dans chaque table de commande (250) correspondant au pourcentage de puissance maximale,
ladite unité de commande programmable fournissant des sorties numériques sous la forme desdites tables de commande (250) pour la commande de commutateurs de puissance statiques qui commandent l'alimentation électrique vers lesdits différents groupes d'impédances, un "0" dans la table de commande correspondant à OFF, un "1" dans la table de commande correspondant à ON.

2. Système de commande selon la revendication 1, les impédances (210 ; 220) à l'intérieur dudit au moins un groupe étant connectées en étoile sans connexion à un fil neutre ou un câble neutre.

3. Système de commande selon la revendication 1 ou 2,

ledit système de synchronisation (17 ; 18) générant un signal ayant des cycles, et

ladite unité de commande comprenant en outre des pointeurs (218 ; 228),

un pointeur par groupe d'impédances,

chaque pointeur (218 ; 228) étant positionné sur une table de commande (250) et procédant avec un bit par cycle dudit signal,

un pointeur (218 ; 228) pour un groupe adjacent suivant d'impédances (210 ; 220) étant sur une position dans la table de commande (250) qui est différente du pointeur (218 ; 228) du groupe adjacent précédent.

4.  Système de commande selon la revendication 3, ledit signal ayant une différence de phase ($\varphi$) avec le réseau d'alimentation.

5.  Système de commande selon la revendication 4, ledit signal étant une onde carrée (17) avec un côté montant et un côté descendant et chaque pointeur (218 ; 228) procédant avec un bit lors du côté montant de ladite onde carrée.

6.  Système de commande selon l'une quelconque des revendications précédentes, les valeurs "1" dans chaque table de commande (250) étant réparties uniformément sur ladite table de commande (250).

7.  Système de commande selon l'une quelconque des revendications précédentes, lesdites impédances étant des lampes infrarouges (212 ; 222).

8.  Système de commande selon l'une quelconque des revendications précédentes, des commutateurs de puissance statiques (214 ; 224) n'étant utilisés que dans deux des trois phases.

9.  Système de séchage sans contact comprenant un système de commande selon l'une quelconque des revendications précédentes.

Fig. 1a

Fig. 1b

Fig. 2

Fig. 3

Fig. 4

Fig. 5a

EP 3 080 901 B1

Fig. 5c

Fig. 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5053604 A
- EP 0040017 A1
- DE 3304322 A1